# EUROPEAN PATENT SPECIFICATION

(11) **EP 0 482 889 B1**
(45) Date of publication and mention of the grant of the patent: **16.04.1997**
(21) Application number: 91309757.2
(22) Date of filing: 22.10.1991
(51) Int. Cl.: B23K 35/30

(54) **Welding material for low coefficient of thermal expansion alloys**
Schweisswerkstoff für Legierungen mit niedrigem Wärmeausdehnungskoeffizient
Métal d'apport de sondage pour alliages à bas coefficient de dilatation thermique

(30) Priority: 26.10.1990 US 604578; 25.01.1991 US 645822
(43) Date of publication of application: 29.04.1992
(73) Proprietor: Inco Alloys International, Inc., Huntington West Virginia 25720 (US)
(72) Inventor: O'Donnell, David Brian, Huntington, West Virginia 25705 (US); Bishel, Robert Anthony, Huntington, West Virginia 25705 (US)
(74) Representative: Hedley, Nicholas James Matthew

(56) References cited:
- GB-A- 980 357
- GB-A- 1 137 608
- GB-A- 2 086 424
- US-A- 3 184 577
- PATENT ABSTRACTS OF JAPAN vol. 11, no. 18 (C-398)(2465) 17 January 1987 & JP-A-61 194 151 (HITACHI) 28 August 1986

## Description

### TECHNICAL FIELD

This invention relates to welding of low coefficient of thermal expansion alloys. In particular, this invention relates to welding material for welding iron-containing low expansion alloys with or without flux.

### BACKGROUND OF THE INVENTION

Historically a combination of iron and nickel or cobalt has been used to produce low coefficient of thermal expansion (CTE) alloys. Invar 36 (36 Ni, balance Fe), Invar 42 (42, Ni balance Fe) and Kovar (29 Ni, 17 Co, 0.2 Mn balance Fe) are common low coefficient of thermal expansion alloys. Welding of iron containing low CTE alloys requires a weld with adequate ductility and strength. In addition, for fabrication of welded low CTE alloys it is desired to use a filler metal with a CTE closely matched to the base metal to limit from thermal deflections and strain.

Without further modification, low CTE base metals may be easily drawn into filler metal wire. However, base metal filler metal is highly subject to cracking resulting from impurities and a relatively large solidification range of about 80° Celsius. Witherell, in U.S. patent number 3,184,577 ('577), disclosed a filler metal specifically designed for welding Invar. A combination of titanium, carbon and manganese was used in the '577 patent to control cracking during welding operations. Commercially, filler metal of the '577 patent has been used for welding Invar 36 with undesirable limitations. Filler metal disclosed in the '577 patent cracks extensively when welding relatively thick sections of Invar. In addition, filler metal of the '577 patent has been limited to relatively slow gas tungsten arc welding GTAW, because cracking is excessive when welding with gas metal arc welding (GTAW). GMAW is significantly quicker than GTAW and is generally preferred for high volume fabrication. Furthermore, multiple pass welding with Witherell's filler metal has caused excessive crack growth problems.

In addition, submerged arc welding (SAW) may be used to further increase welding rates. Submerged arc welding operability of a filler metal is another highly advantageous property. Furthermore, flux coated electrodes are useful for out of position welding where it is difficult to weld by GTAW, GMAW or SAW.

GB-A-703 907 describes an alloy for forming hairsprings having 24-27% Ni, 0.2-0.7% C, 1-5% Nb, 0.5-1% Mn, balance Fe.

It is an object of this invention to produce a welding material having a coefficient of thermal expansion that matches the base metal with sufficient strength and ductility.

It is a further object of this invention to produce a filler metal capable of welding relatively thick sections of Invar without cracking.

It is a further object of this invention to provide a filler metal that may be gas metal arc welded without cracking.

It is a further object to produce a welding material that may be used in multiple pass type welding operations without cracking.

It is a further object of the invention to produce a weld wire that may be submerged arc welded.

### SUMMARY OF THE INVENTION

The welding material of the invention may be used for GMAW relatively thick sections of low CTE alloys. In fact, multiple pass GMAW may be used without cracking. Furthermore, the welding material of the invention facilitates rapid submerged arc welding and may be flux coated for facilitating out of position welding. The invention is as defined in the accompanying claims. Preferably Mg or Ce is used during melting to tie up sulfur which tends to promote crack formation. Most preferably, Mg is used in an amount greater than the amount of sulfur. Impurities are preferably limited to less than 0.1% sulfur, less than 0.1% phosphorous and less than 1% silicon.

Most preferably, the welding material includes about 25-55% nickel, 0-30%, about 0.05-0.35% carbon, 1-3% niobium plus tantalum and a balance iron with incidental impurities. Furthermore, filler metal is preferably limited to 0-1.5% manganese, 0-2% titanium and about 0-0.5% aluminum. In addition, 0-0.5% cerium, magnesium or zirconium is preferably used for tying up sulfur. Furthermore, it may be most advantageous to limit cerium, magnesium or zirconium to less than 0.1%. In addition, impurities are preferably limited to 0.05% sulfur, 0.05% phosphorous and 0.5% silicon.

### DESCRIPTION OF PREFERRED EMBODIMENT

Several experimental heats were tested to find a combination of ingredients that may be added to low CTE alloys without cracking during multiple pass GMAW.

Composition of typical experimental heats tested are listed below in Table 1 as heats numbers 1-14 (all compositions of this specification are given in weight percent, unless specifically expressed otherwise). Heat number 15 was a sample of Invar 36.

**TABLE 1**

| **Heat No.** | **C** | **Mn** | **S** | **Si** | **Cu** | **Ni** | **Ti** | **Nb** | **Mg** | **Ca** | **P** |
|---|---|---|---|---|---|---|---|---|---|---|---|
| **1** | .068 | .71 | .005 | .010 | .48 | 35.47 | .009 | .007 | .002 | .000 | .003 |
| **2** | .105 | .71 | .006 | .015 | .50 | 35.55 | .000 | 1.12 | .003 | .000 | .004 |
| **3** | .120 | .72 | .004 | .053 | .49 | 35.37 | .000 | 1.13 | .000 | .012 | .004 |
| **4** | .107 | .71 | .005 | .076 | .50 | 35.59 | .78 | .054 | .000 | .017 | .003 |
| **5** | .21 | .72 | .005 | .066 | .49 | 34.89 | 1.10 | .003 | .000 | .012 | .003 |
| **6** | .21 | .71 | .009 | .058 | .49 | 35.07 | .037 | .002 | .000 | .017 | .003 |
| **7** | .198 | .72 | .009 | .015 | .50 | 34.97 | .000 | .001 | .003 | .000 | .003 |
| **8** | .22 | .72 | .007 | .017 | .50 | 35.22 | .000 | 1.87 | .004 | .000 | .004 |
| **9** | .129 | .73 | .007 | .065 | .024 | 35.75 | .000 | 1.15 | .000 | .017 | .004 |
| **10** | .126 | .72 | .006 | .066 | .96 | 35.47 | .000 | 1.13 | .000 | .017 | .004 |
| **11** | .128 | .70 | .005 | .065 | 1.85 | 35.09 | .000 | 1.14 | .000 | .016 | .004 |
| **12** | .136 | .73 | .007 | .080 | 3.81 | 34.34 | .000 | 1.14 | .000 | .022 | .004 |
| **13** | .163 | .86 | .008 | 0 | 0.022 | 40.48 | .171 | 1.76 | .004 | .000 | .005 |
| **14** | .208 | .73 | .008 | .037 | 0.036 | 35.24 | .143 | 1.62 | .007 | .000 | .005 |
| **15** | .013 | .33 | .007 | .000 | .000 | 36.36 | .027 | .006 | .004 | .000 | .003 |

The heats of Table 1 were tested for solidification range (values in Table 1 have been rounded to the nearest one thousandth of a weight percent to reflect accuracy of instrumentation used).

The heats 1, 5, 6 and 7 do not form part of the invention.

Test results are given below in Table 2.

**TABLE 2**

| **HEAT** | **LIQUIDOUS °C** | **SOLIDUS °C** | **DIFFERENCE °C** |
|---|---|---|---|
| **1** | 1471 | 1452 | 19 |
| **2** | 1466 | 1425 | 41 |
| **3** | 1467 | 1426 | 41 |
| **4** | 1467 | 1428 | 39 |
| **5** | 1462 | 1423 | 39 |
| **6** | 1468 | 1450 | 18 |
| **7** | 1470 | 1451 | 19 |
| **8** | 1462 | 1418 | 44 |
| **9** | 1469 | 1429 | 40 |
| **10** | 1465 | 1425 | 40 |
| **11** | 1462 | 1425 | 37 |
| **12** | 1451 | 1407 | 44 |
| **13** | 1468 | 1381 | 87 |

The difference between liquidous and solidous temperatures of the test heats (18-44°C) was much improved over Invar 36 (heat 15) which may have a temperature differential of at least 80°C as measured between liquidous and incipient solidous. This decreased solidification range contributes to reducing cracking during solidification.

Heat numbers 1-12 were gas tungsten arc spot welded at 420 amp and 22 volts for 10 seconds in a single spot weld without changing position. This 420 amp, 22 volt operation greatly exceeded minimum required energy to weld. The excess energy applied additional stress to the weld for evaluation under severe welding conditions. As a result of this 10 second test, only heat numbers 9 and 12 cracked. Heat number 9 had a total crack length of 0.60 cm and heat number 12 had a total crack length of 0.60 cm.

A more severe 20 second gas tungsten arc spot weld at 420 amp and 22 volts was then used to determine which filler metal compositions had the best cracking resistance. Results of total crack length for two separate tests are given below in Table 3.

**TABLE 3**

| **HEAT** | **TEST A TOTAL CRACK LENGTH (cm)** | **TEST B TOTAL CRACK LENGTH (cm)** | **TOTAL (cm)** |
|---|---|---|---|
| **1** | 6.2 | 5.5 | 11.7 |
| **2** | 0 | 0 | 0 |
| **3** | 3.0 | 2.4 | 5.4 |
| **4** | 6.0 | 7.9 | 13.9 |
| **5** | 1.5 | 0.5 | 2.0 |
| **6** | 6.9 | 1.5 | 8.4 |
| **7** | 0 | 0 | 0 |
| **8** | 0 | 0 | 0 |
| **9** | 6.2 | 6.4 | 12.6 |
| **10** | 2.4 | 2.8 | 5.2 |
| **11** | 6.3 | 7.8 | 14.1 |
| **12** | 5.4 | 4.1 | 9.5 |

Heat numbers 2 and 8 produced the best results having no cracks. The combination of carbon and niobium of heats 2 and 8 was found to have the most preferred cracking resistance properties. For purposes of this specification, it is recognized that niobium and tantalum are interchangeable and that niobium or tantalum may be used independently or in combination for welding materials of the invention.

A cruciform or X-joint welding test at 420 amp and 22 volts was then used to test filler metals under more rigorous welding conditions. All tests were 9.5 cm in length. Test results are given below in Table 4.

**TABLE 4**

| **HEAT** | **TEST A TOTAL CRACK LENGTH** | **TEST B TOTAL CRACK LENGTH** | **TEST C TOTAL CRACK LENGTH** | **TOTAL** |
|---|---|---|---|---|
| **1** | 1.1 | 1.4 | 4.4 | 6.9 |
| **2** | 0.4 | 0 | 0 | 0.4 |
| **3** | 0.4 | 0.6 | 0.7 | 1.7 |
| **4** | 0.4 | 1.1 | 1.4 | 2.9 |
| **5** | 0.4 | 0 | 0 | 0.4 |
| **6** | 2.0 | 1.8 | 5 | 8.8 |
| **7** | 7.5 | 3.8 | 3.9 | 15.2 |
| **8** | 0.1 | 0 | 0 | 0.1 |
| **9** | 0 | 1.3 | 0.4 | 1.7 |
| **10** | 0.8 | 0.8 | 0.6 | 2.2 |
| **11** | 1.0 | 0.8 | 0.6 | 2.2 |
| **12** | 0.6 | 0.8 | 1.1 | 2.5 |

Again heat numbers 7 and 8 gave the best results with heat number 5 being the next best.

Welds produced at 415 amps and 22V were tested for physical properties. A bend test was used to measure propensity to crack during bending or ductility. Impact tests were used to determine strength in as welded condition and strength after a 1.5 hour heat treatment in an inert 790°C atmosphere. Test results are given below in Table 5.

**TABLE 5**

| **HEAT** | **BEND TOTAL CRACK LENGTH** | **IMPACT STRENGTH AS WELDED (JOULES)** | **IMPACT STRENGTH HEAT TREATED AT 750°C FOR 1.5 HOURS (JOULES)** |
|---|---|---|---|
| **1** | X, 0.3 | 98 149 81 | --- |
| **2** | 0, 0.08 | 56 56 54 | 68 68 76 |
| **3** | 0, 0.08 | 87 94 81 | 82 77 83 |
| **4** | 0, 0 | 60 50 66 | 55 49 61 |
| **5** | 0, 0 | 27 26 30 | 26 24 23 |
| **6** | 0.5, 1.8 | 58 79 45 | 60 37 58 |
| **7** | X, 0.08 | 68 77 89 | 41 76 89 |
| **8** | 0, 0 | 34 41 37 | 33 38 35 |
| **9** | 0, 0 | 71 74 72 | 66 66 74 |
| **10** | 0, 0 | 70 74 72 | 81 77 73 |
| **11** | 0, 0 | 61 65 68 | 68 62 62 |
| **12** | 0, 0 | 62 64 72 | 69 64 64 |
| X -- designates weld failure | | | |

The test data indicate that heat numbers 2 and 8 rich in carbon and niobium had physical properties acceptable for an Invar 36 weld. Heat number 5, which relied upon carbon and titanium for crack resistance had about one half of the impact strength of welds produced using carbon and niobium for cracking resistance. Furthermore, during intermediate anneals often used in drawing weld wire to final size, titanium has a much greater tendency to oxidize than niobium. Titanium tends to form surface oxides during annealing which decreases die wear. Predicted CTE of the filler metals tested were calculated to be very close to the base metal. It is preferred to add more magnesium or cerium than sulfur to ensure tying up of sulfur and prevent sulfur rich films. An addition of up to 0.5% Mg, Zr or Ce is preferred to limit negative effects of sulfur inclusions.

Heat numbers 13 and 14 were tested for coefficient of thermal expansion (CTE) in accordance with ATSM E228. To match CTE, preferably the ratio of nickel, iron and cobalt approximates the ratio of nickel, iron and cobalt in the base metal to be welded. Advantageously, weight percent of nickel, iron and cobalt is within 10 percent of the base metal weight percent. For example, a welding material for an alloy having 36 weight percent nickel would have a weight percentage nickel of about 32.4 to 39.6. Most advantageously, nickel, cobalt and iron are each within about 2 weight percent of the base metal. Heat 13 compared favorably to Invar 42. In addition, when welding iron-nickel low coefficient of thermal expansion alloy systems that do not contain cobalt, it is most advantageous not to substitute cobalt for nickel in the welding material. Invar 42 has a maximum CTE of 4.7 cm/cm/°C X 10⁻⁶ at 300°C and a maximum CTE of 7.4 cm/cm/°C X 10⁻⁶ at 450°C. Heat number 13 measured 5.07 cm/cm/°C X 10⁻⁶ at 300°C and 8.33 cm/cm/°C X 10⁻⁶ at 450°C. The proximity of these values to specified values for Invar 42 specification would result in minimal stress from thermal cycling.

Heat number 14 (Invar 36 number metal), also was found to have a close CTE to maximum Invar 36 specifications. Table 6 below compares heat number 14 to base metal maximum values and to CTE data extrapolated from Figure 2 of Witherell's U.S. Patent No. 3,184,577 ('577).

**TABLE 6**

| **COEFFICIENT OF THERMAL EXPANSION** | | | |
|---|---|---|---|
| **TEMPERATURE °C** | **(cm/cm/°C X 10**^{**-6**}**)** | | |
| | **INVAR 36 (MAX.)** | **HEAT NO. 14** | **WITHERELL U.S. Pat. No. 3,184,577** |
| 93 | 2.0 | 2.3 | 2.8 |
| 149 | 2.5 | 2.8 | 5.4 |
| 260 | 4.9 | 5.9 | 12.2 |
| 371 | 7.9 | 8.9 | 16.7 |

As shown in Table 6, CTE for heat number 14 compares favorably to base metal Invar 36 and is significantly improved over the '577 patent.

Welding material of the invention is advantageously within the following ranges expressed in Table 7.

**TABLE 7**

| | **BROAD** | **NARROW** |
|---|---|---|
| **Nickel** | 22 - 55 | 22 - 55 |
| **Cobalt** | 0 - 30 | 0 - 30 |
| **Carbon** | 0.105 - 0.5 | 0.105 - 0.35 |
| **Niobium and/or Tantalum** | 1 - 3 | 1 - 3 |
| **Manganese** | 0 - 3 | 0 - 1.5 |
| **Titanium** | 0 - 3 | 0 - 2 |
| **Aluminum** | 0 - 1 | 0 - 0.5 |
| **Magnesium** | 0 - 0.5 | 0 - 0.1 |
| **Cerium** | 0 - 0.5 | 0 - 0.1 |
| **Zirconium** | 0 - 0.5 | 0 - 0.1 |
| **Sulfur** | 0 - 0.1 | 0 - 0.05 |
| **Silicon** | 0 - 1 | 0 - 0.5 |
| **Phosphorous** | 0 - 0.1 | 0 - 0.05 |
| **Iron** | Balance | Balance |

Nickel, iron and cobalt ranges are advantageously adjusted to amounts approximate to nickel iron and cobalt amounts contained in low coefficient of thermal expansion base metals to be welded. Most advantageously, nickel, iron and cobalt are further adjusted to achieve a matched CTE.

A welding material of the invention was tested for submerged arc welding. Filler metal of heat numbers 13 and 14 was combined with Incoflux® 6 submerged arc flux (Incoflux is a registered trademark of the Inco family of companies). Incoflux 6 submerged arc flux has the following compositions:

| **Ingredient** | **Weight Percent** |
|---|---|
| **Al**_{**2**}**O**_{**3**} | 15 - 40 |
| **CaF**_{**2**} | 40 - 70 |
| **MgO** | 3 - 7 |
| **Ni** | 1 - 5 |
| **K**_{**2**}**SiO**_{**3**} | 1 - 5 |
| **Na**_{**3**}**AlF**_{**6**} | 3 - 7 |
| **TiO**_{**2**} | 3 - 7 |

Bare filler metals of this invention, for Invar 36 and 42, have operated unexpectedly well. For example, a 0.11 cm diameter Invar 36 filler metal successfully operated at 325-350 amps, at 32 volts and 15.9 m/s. Typically, operating parameters for filler metals used in submerged arc welding of nickel-base alloys are limited to 240-250 amps and slower feed rates. The great resistance to cracking and porosity of the filler metal allows welding operations at increased rates.

Welding material of the invention have also been successfully used as a core wire for a coated electrode. Advantageously, flux of the invention contains metal carbonate selected from the group consisting of calcium carbonate, barium carbonate, manganese carbonate and strontium carbonate for control of flux solidification. It has been found to be advantageous to add coarse calcium carbonate (74 to 420 microns) to the flux for preferred drying properties. Cryolite, Tri-Manox® brand brown manganese oxide (Mn₃O₄ 80%, SiO₂ 5%, Fe 10%) and/or alkaline metal fluoride selected from the group consisting of CaF₂, BaF₂ and SrF₂ may be used for increasing fluidity. Advantageously, magnetite is used to let silicon pick up in the weld deposit. Rutile and/or zirconia maybe used as filler. In addition, rutile and other titanium-containing compounds such as NiTi and FeTi may be used to limit porosity formed from nitrogen. Natrosol® brand hydroxyethycellulose (HEC) is advantageously added as an extrusion aid and to provide green strength. Bentonite is advantageously added to provide strength after baking. Flux coated weld rods of the invention contained a total of 30 weight percent flux and binder after baking. And finally, any binder such as water glass may be used to hold the flux to the weld rod. Binder specifically used was a liquid having manufacturer's specification of 31.3-32.5% SiO₂, 10.5-11.5% Na₂O and 2.83-2.98% SiO₂ + Na₂O, having a viscosity at 20°C of 780-1140 centipoise and a specific gravity at 20°C of about 1.59-1.67 g/cm³.

Advantageously, niobium and carbon compounds are added to maintain sufficient niobium and carbon content in the weld deposit. Most advantageously, a combination of NiNb, FeNb, (Ni, C) and (Fe,C) is added in a proportion that maintains niobium levels and carbon levels. In addition, NiTi and/or FeTi may be added to the flux to control porosity and to a lesser extent contribute nickel and iron to the weld deposit. Advantageously, nickel and iron components are controlled to match base metal weight percents. Desired ranges of the ingredients and compositions of two specific coated electrodes which successfully operated are provided below in Table 8.

**TABLE 8**

| | **Broad** | **Intermediate** | **Specific Compositions** | |
|---|---|---|---|---|
| **Alkaline Metal Carbonate** | 10 - 40 | 20 - 35 | 15 (CaCO₃) | 15 (CaCO₃) + 5 (SrCo₃) |
| **Cryolite** | 0 - 45* | 0 - 35** | 25 | 25 |
| **Alkaline Metal Fluoride** | 0 - 40* | 0 - 30** | | |
| **Rutile** | 0 - 45 | 20 - 45 | 30 | 30 |
| **Zirconia** | | 0 - 20 | | |
| **Magnetite** | | 0 - 10 | 6 | 6 |
| **Mn**_{**3**}**O**_{**4**} **(80%), 5% SiO**_{**2**}**, 10% Fe** | | 0 - 15 | 5 | |
| **FeNb** | | 0 - 15 | 3 (65Nb, 34Fe, 1Al) | 3 (65Nb, 34Fe, 1Al) |
| **Fe, C** | | 0 - 15 | | |
| **NiNb** | | 0 - 15 | | |
| **Ni, C** | | 0 - 15 | 1.5 (75 Ni, 25C) | 1.5 (75Ni, 25C) |
| **FeTi** | | 0 - 15 | | |
| **NiTi** | | 0 - 15 | | |
| **Bentonite** | 0 - 5 | 2 - 5 | 4 | 4 |
| **Hydroxyethylcellulose** | 0 - 4 | 0 - 2 | 0.5 | 0.5 |
| **Binder** | | 0 - 4 | 20 (sodium silicate) | 20 (sodium silicate) |
| **Water Cellulose or HEC** | | | 1.25 | 1.25 |

| | | | | |
|---|---|---|---|---|
| * Cryolite plus Alkaline Metal Fluoride equals 5-45% | | | | |
| ** Cryolite plus Alkaline Metal Fluoride equals 10-35% | | | | |

It is recognized that the welding material of the invention may be welded in various welding configurations including bare filter metal GTAW, GMAW, SAW, coated electrode, flux-cored and other known configurations provided weld deposit composition is maintained. Weld deposit parameters are given below in Table 9.

**TABLE 9**

| | **BROAD** | **INTERMEDIATE** | **NARROW** |
|---|---|---|---|
| **C** | 0.1 - 0.35 | 0.1 - 0.30 | 0.1 - 0.25 |
| **Mn** | 0 - 2.5 | 0 - 1.5 | 0 - 0.8 |
| **Fe** | Bal. | Bal. | Bal. |
| **S** | 0 - 0.05 | 0 - 0.02 | 0 - 0.01 |
| **Si** | 0 - 1 | 0 - 1 | 0 - .75 |
| **Cr** | 0 - 2 | 0 - 1 | 0 - 0.5 |
| **Al** | 0 - 0.5 | 0 - 0.25 | 0 - 0.2 |
| **Ti*** | 0 - 0.75 | 0 - 0.5 | 0 - 0.4 |
| **Nb** | 0.1 - 4 | 0.5 - 3 | 1 - 2.5 |
| **P** | 0 - 0.05 | 0 - 0.02 | 0 - 0.01 |
| **Mg** | 0 - 0.1 | 0 - 0.1 | 0.0005 - 0.075 |
| **Cu** | 0 - 4 | 0 - 2 | 0 - 0.5 |
| **Ag, B, Sn, Zn** | 0 - 0.01 | 0 - 0.005 | 0 - .001 |
| **Ni + Co** | ±10* | ±5* | ±2* |
| **Ni (Invar 36)** | 31 - 40 | 33 - 38 | 34.25 - 36.75 |
| **Ni (Invar 42)** | 36 - 45 | 39 - 42 | 39.5 - 41.5 |

| | | | |
|---|---|---|---|
| * Weight percent of nickel plus cobalt in relation to weight percent of nickel plus cobalt in low coefficient of thermal expansion base metal of nominal composition containing nickel and iron. | | | |

In conclusion, welding materials of the invention have been successfully produced that have a matched CTE, strength and ductility. Furthermore, alloys of the carbon and niobium combination has allowed welding of thick sections. GMAW of low CTE alloys and multiple pass welding without cracking.

## Claims

1. A welding material capable of welding iron-containing low coefficient of thermal expansion alloys comprising by weight percent 22-55% nickel, 0-30% cobalt, 0.105-0.5% carbon, 1-3% welding agent selected from the group consisting of niobium plus tantalum, 0-1.5% manganese, 0-3% titanium, 0-1% aluminium, less than 0.1% sulfur, less than 1% silicon, less than 0.1% phosphorous, 0-0.5% element selected from the group consisting of magnesium, zirconium, and cerium, the material optionally containing up to 3.81% Cu and balance iron with incidental impurities wherein the range of 24-27% Ni is excluded.

2. The welding material of claim 1 wherein said welding material contains 0.12 to 0.35% carbon, 1 to 3% niobium, 0 to 1.5% manganese, 0 to 2% titanium, 0 to 0.5% aluminium, 0 to 0.1% magnesium, 0 to 0.1% cerium, 0 to 0.1% zirconium, 0 to 0.05% sulfur, 0 to 0.5% silicon and 0 to 0.05% phosphorous.

3. The welding material of claim 1 wherein said welding material is coated with a flux.

4. The welding material of claim 3 wherein said flux includes 10-40% alkaline metal carbonate, 0-45% cryolite, 0-40% alkaline metal fluoride, 0-45% rutile, a binder and 5-45% cryolite plus alkaline metal fluoride.

5. Weld deposits formed by welding a base metal of an iron-containing low coefficient of thermal expansion alloy optionally containing Co with a welding material according to any one of claims 1 to 4 and having, by weight, 0.1-0.35% carbon, 0-2.5% manganese, 0-0.8% magnesium, 0.1-4% niobium plus tantalum, 0 to 0.75% titanium, 31 to 45% nickel, 0 to 1% silicon, 0 to 2% chromium, 0 to 0.5% aluminium, 0 to 0.05% sulfur, 0 to 0.05% phosphorous and less than 0.01% ingredients selected from the group consisting of silver, boron, tin and zinc, wherein the weight percentage of the nickel plus the cobalt content is within 10% of the nominal nickel plus cobalt composition of the base metal.

6. The welding deposit of claim 5 wherein said welding deposit is further characterized by 0.1 to 0.30% carbon, 0 to 1.5% manganese, 0 to 0.02% sulfur, 0.5 to 3% niobium plus tantalum and 0 to 0.5% titanium.

7. The welding deposit of claim 5 wherein said welding deposit is further characterized by 0.1% to 0.25% carbon, 0 to 1.0% manganese, 0 to 0.01% sulfur, 0 to 0.5% silicon, 1 to 2.5 niobium plus tantalum and 0 to 0.4% titanium.

8. The welding deposit of claim 7 wherein said welding deposit is further characterized by 0 to 0.5% chromium, 0 to 0.2% aluminium, 0 to 0.01% phosphorous, 0.0005 to 0.075% magnesium, 0 to 0.5% copper and 0 to 0.001% ingredients selected from the group consisting of silver, boron, tin and zinc.

9. The welding deposit of any one of claims 5 to 8 wherein said welding deposit contains 33 to 42% nickel.

10. A method of welding iron-containing low coefficient of thermal expansion alloys which comprises welding them with a welding material according to anyone of claims 1-4.

11. A method as claimed in claim 10, when dependent on claim 1 or 2 wherein the welding material is used with a flux for submerged arc welding and said flux includes 15-40% Al₂O₃, 40-70% CaF₂, 3-7% MgO, 1-5% Ni, 1-5% K₂SiO₃, 3-7% Na₃AlF₆ and 3-7% TiO₂.

## Patentansprüche

1. Schweißwerkstoff für Legierungen mit niedrigem Wärmeausdehnungskoeffizient und - in Gewichtsprozent - 22 bis 55% Nickel, 0 bis 30% Kobalt, 0,105 bis 0,5% Kohlenstoff, 1 bis 3% Niob und/oder Tantal als Schweißmittel, 0 bis 1,5% Mangan, 0 bis 3% Titan, 0 bis 1% Aluminium, unter 0,1% Schwefel, unter 1% Silizium, unter 0,1% Phosphor, 0 bis 0,5% Magnesium, Zirkonium und Cer einzeln oder nebeneinander sowie fakultativ bis 3,81% Kupfer Rest Eisen einschließlich Verunreinigungen unter Ausschluß des Bereichs von 24 bis 27% Nickel.

2. Schweißwerkstoff nach Anspruch 1 mit 0,12 bis 0,35% Kohlenstoff, 1 bis 3% Niob, 0 bis 1,5% Mangan, 0 bis 2% Titan, 0 bis 0,5% Aluminium, 0 bis 0,1% Magnesium, 0 bis 0,1% Cer, 0 bis 0,1% Zirkonium, 0 bis 0,05% Schwefel, 0 bis 0,5% Silizium und 0 bis 0,05% Phosphor.

3. Schweißwerkstoff nach Anspruch 1 mit einer Flußmittelumhüllung.

4. Schweißwerkstoff nach Anspruch 3 mit einer 10 bis 40% Alkalimetallkarbonat, 0 bis 45% Kryolith, 0 bis 40% Alkalimetallfluorid, 0 bis 45% Rutil bei einem Gesamtgehalt von 5 bis 45% Kryolith und Alkalimetallfluorid und ein Bindemittel enthaltenden Flußmittelumhüllung.

5. Schweißgut aus dem Schweißen eines Grundmetalls aus einer eisenhaltigen Legierung mit niedrigem Wärmeausdehnungskoeffizient und fakultativem Kobaltgehalt mit einem Schweißwerkstoff nach einem der Ansprüche 1 bis 4 mit 0,1 bis 0,35% Kohlenstoff, 0 bis 2,5% Mangan, 0 bis 0,8% Magnesium, 0,1 bis 4% Niob und Tantal, 0 bis 0,75% Titan, 31 bis 45% Nickel, 0 bis 1% Silizium, 0 bis 2% Chrom, 0 bis 0,5% Aluminium, 0 bis 0,05% Schwefel, 0 bis 0,05% Phosphor und unter 0,01% Silber, Bor, Zinn und Zink einzeln oder nebeneinander, dessen Gesamtgehalt an Nickel und Kobalt bis 10% des Gesamtgehalts an Nickel und Kobalt des Grundwerkstoffs beträgt.

6. Schweißgut nach Anspruch 5 mit 0,1 bis 0,30% Kohlenstoff, 0 bis 1,5% Mangan, 0 bis 0,2% Schwefel, insgesamt 0,5 bis 3% Niob und Tantal sowie 0 bis 0,5% Titan.

7. Schweißgut nach Anspruch 5 mit 0,1 bis 0,25% Kohlenstoff, 0 bis 1,0% Mangan, 0 bis 0,01% Schwefel, 0 bis 0,5% Silizium, 1 bis 2,5% Niob und Tantal sowie 0 bis 0,4% Titan.

8. Schweißgut nach Anspruch 7 mit 0 bis 0,5% Chrom, 0 bis 0,2% Aluminium, 0 bis 0,01% Phosphor, 0,0005 bis 0,075% Magnesium, 0 bis 0,5% Kupfer und 0 bis 0,001% Silber, Bor, Zinn und Zink einzeln oder nebeneinander.

9. Schweißgut nach einem der Ansprüche 5 bis 8 mit 33 bis 42% Nickel.

10. Verfahren zum Schweißen einer Legierung mit niedrigem Wärmeausdehnungskoeffizient, gekennzeichnet durch die Verwendung eines Schweißwerkstoffs nach einem der Ansprüche 1 bis 4.

11. Verfahren nach Anspruch 1 oder 2 und 10 unter Verwendung eines Schweißwerkstoffs mit einer Umhüllung zum UP-Lichtbogenschweißen mit 15 bis 40% Al₂O₃, 40 bis 70% CaF₂, 3 bis 7% MgO, 1 bis 5% Ni, 1 bis 5% K₂SiO₃, 3 bis 7% Na₃AlF₆ und 3 bis 7% TiO₂.

## Revendications

1. Un matériau d'apport pour soudure, susceptible de souder des alliages renfermant du fer, à faible coefficient de dilatation thermique, qui comporte, en pourcentage pondéral, 22 à 55 % de nickel, 0 à 30 % de cobalt, 0,105 à 0,5 % de carbone, de 1 à 3 % d'agent de soudure choisi dans le groupe composé du niobium plus le tantale, de 0 à 1,5 % de manganèse, de 0 à 3 % de titane, de 0 à 1 % d'aluminium, moins de 0,1 % de soufre, moins de 1 % de silicium, moins de 0,1 % de phosphore, de 0 à 0,5 % d'un élément choisi dans le groupe constitué par le magnésium, le zirconium et le cérium, le matériau renfermant facultativement jusqu'à 3,81 % de cuivre, le reste étant du fer avec des impuretés insignifiantes, dans lequel la gamme de 24 à 27 % de Ni est exclu.

2. Le matériau pour soudure de la revendication 1, dans lequel ledit matériau pour soudure renferme de 0,12 à 0,35 % de carbone, de 1 à 3 % de niobium, de 0 à 1,5 % de manganèse, de 0 à 2 % de titane, de 0 à 0,5 % de d'aluminium, de 0 à 0,1 % de magnésium, de 0 à 0,1 % de cérium, de 0 à 0,1 % de zirconium, de 0 à 0,05 % de soufre, de 0 à 0,5 % de silicium et de 0 à 0,05 % de phosphore.

3. Le matériau pour soudure de la revendication 1, dans lequel ce matériau pour soudure est revêtu d'un fondant.

4. Le matériau pour soudure de la revendication 3, dans lequel ledit fondant comporte de 10 à 40 % de carbonate de métal alcalin, de 0 à 45 % de cryolite, de 0 à 40 % de fluorure de métal alcalin, de 0 à 45 % de rutile, d'un agent liant et de 5 à 45 % de cryolite plus du fluorure de métal alcalin.

5. Matière d'apport pour soudure, réalisée en soudant un métal de base en un alliage à faible coefficient de dilatation thermique, contenant du fer, contenant éventuellement Co, avec un matériau d'apport pour soudure selon l'une quelconque des revendications 1 à 4 et ayant, en poids, de 0,1 à 0,35 % de carbone, de 0 à 2,5 % de manganèse, de 0 à 0,8 % de magnésium, de 0,1 à 4 % de niobium plus du tantale, de 0 à 0,75 % de titane, de 31 à 45 % de nickel, de 0 à 1 % de silicium, de 0 à 2 % de chrome, de 0 à 0,5 % d'aluminium, de 0 à 0,05 % de soufre, de 0 à 0,05 % de phosphore et moins de 0,01 % d'ingrédients choisis dans le groupe composé de l'argent, du bore, de l'étain et du zinc, dans lequel le pourcentage pondéral de la teneur en nickel plus en cobalt se situe dans la limite de 10 % de la composition nominale de nickel plus cobalt du métal de base.

6. La matière d'apport pour soudure de la revendication 5, dans laquelle ladite matière d'apport est en outre caractérisée par de 0,1 à 0,30 % de carbone, de 0 à 1,5 % de manganèse, de 0 à 0,02 % de soufre, de 0,5 a 3 % de niobium plus du tantale et de 0 à 0,5 % de titane.

7. La matière d'apport pour soudure de la revendication 5, dans laquelle ladite matière d'apport pour soudure est en outre caractérisée par de 0,1 % à 0,25 % de carbone, de 0 à 1,0 % de manganèse, de 0 à 0,01 % de soufre, de 0 à 0,5 % de silicium, de 1 à 2,5 % de niobium plus du tantale et de 0 à 0,4 % de titane.

8. La matière d'apport pour soudure de la revendication 7, dans laquelle ladite matière d'apport pour soudure est en outre caractérisée par de 0 à 0,5 % de chrome, de 0 à 0,2 % d'aluminium, de 0, à 0,01 % de phosphore, de 0,0005 à 0,075 % de magnésium, de 0 à 0,5 % de cuivre et de 0 à 0,001 % des ingrédients choisis dans le groupe composé par l'argent, le bore, l'étain et le zinc.

9. La matière d'apport pour soudure de l'une quelconque des revendications 5 à 8, dans laquelle ladite matière d'apport renferme de 33 à 42 % de nickel.

10. Un procédé de soudage d'alliages, renfermant du fer, à faible coefficient de dilatation thermique, qui comporte leurs soudures avec un matériau d'apport pour soudure selon l'une quelconque des revendications 1 à 4.

11. Un procédé tel que revendiqué dans la revendication 10, lorsqu'elle dépend de la revendication 1 ou 2, dans lequel le matériau d'apport pour soudage est utilisé avec un fondant pour soudage par arc immergé et ledit fondant comporte de 15 à 40 % de Al₂O₃, de 40 à 70 % de CaF₂, de 3 à 7 % de MgO, de 1,5 % de Ni, de 1,5 % de K₂SiO₃, de 3 à 7 % de Na₃AlF₆ et de 3 à 7 % de TiO₂.
